Europäisches Patentamt

(19) European Patent Office

Office européen des brevets

(11) EP 0 752 302 A1

(12) EUROPEAN PATENT APPLICATION

(43) Date of publication:
08.01.1997 Bulletin 1997/02

(51) Int. Cl.⁶: B29B 13/02, C08G 63/90,
B29B 13/06
// B29K667:00

(21) Application number: 96110344.7

(22) Date of filing: 27.06.1996

(84) Designated Contracting States:
AT BE CH DE DK ES FI FR GB GR IE IT LI LU MC
NL PT SE

(30) Priority: 05.07.1995 IT PN950036

(71) Applicant: SIPA S.p.A.
I-31029 Vittorio Veneto (IT)

(72) Inventor: Piva, Rinaldo
31040 Meduna di Livenza, Treviso (IT)

(74) Representative: Giugni, Valter et al
PROPRIA
Protezione Proprietà Industriale S.r.L.
Via Mazzini 13
33170 Pordenone (IT)

(54) Method and apparatus for producing hollow bodies of polyethylene terephthalate

(57) Method for pre-treating a mass of fiber-grade PET (polyethylene terephthalate) resin in granular form, wherein said pre-treatment method is carried out before a drying treatment and includes keeping said mass of PET resin in a stream of air heated to a temperature of substantially 170°C through a period of not less than 1.1 hours in such a manner that substantially the entire mass of resin is exposed to and affected by said stream of hot air and is stirred continuously.

In a preferred manner, said air is then removed from said mass of material and exhausted in such a manner that it is prevented from mixing up with the air taken in to form the stream of air being again blown into said mass of material. The purpose of the method is to convert fiber-grade PET into a polymer having properties that are very close to the ones of bottle-grade PET and, in particular, having an acetaldehyde content that is lowered from approx. 60 ppm to approx. 3 ppm, as well as an ultimate crystallinity of approx. 35% over the whole mass of treated material.

FIG. 3

EP 0 752 302 A1

## Description

The present invention refers to a method and a related apparatus for producing hollow bodies of polyethylene terephthalate (PET) material of the type that is usually known under the denomination of fiber-grade PET.

More particularly, the invention refers to a method and a related apparatus for treating said fiber-grade PET material in such a manner as to obtain, from the subsequent processing thereof, the same qualitative results and the same performance profile that are usually obtained with bottle-grade PET material, ie. the special PET grade suitable for producing beverage bottles.

The terms "fiber-grade" and "bottle-grade", as used throughout the following description of the invention, are common-use technical terms designating different grades of polyethylene terephthalate material, and are generally known by those skilled in the art. Therefore, the material to which those terms actually refer shall not be characterized here, nor shall the respective production processes be described any further.

For reasons of greater convenience and simplicity, the following description will refer to the production of bottles intended to contain liquids, and in particular more either carbonated or non-carbonated beverages, whereas it will however be appreciated that the invention itself similarly applies to any other type of hollow PET container.

It is generally known that the two above cited types of PET differ in a substantially significant manner from each other as far as a number of fundamental properties thereof are concerned. In particular, fiber-grade PET has some limitations and drawbacks that preclude it from being used in applications involving the production of food-grade containers, ie. containers intended to contain food, in particular carbonated and non-carbonated beverages.

The main differences between such two PET grades are substantially as set forth in the Table below:

|  | Fiber-Grade | Bottle-Grade |
| --- | --- | --- |
| Viscosity | 0.60-0.64 dl/gr | 0.76-0.82 dl/gr |
| Acetaldehyde | 60-200 ppm | 1 ppm max |

The moisture content is similarly high in both grades, as this will be dealt with more closely further on.

It is generally known that the discriminating element, as far as the use of fiber-grade PET is concerned, is the high acetaldehyde content and the variability thereof.

In view of obtaining a bottle-grade PET material, it is a common practice to make use of a so-called "regrading" process, by which the fiber-grade material is converted into a bottle-grade one, the latter being further conferred the property of a crystallization of approx. 50%, which certainly represents a clear advantage in the use of the bottles, since a high degree of crystallization is instrumental in creating a more effective barrier effect against the passage of carbon dioxide and improving the mechanical characteristics of the container.

However, the constantly increasing utilization of bottles for containing so-called soft beverages, as well as carbonated and non-carbonated mineral water, has quickly led to a condition of saturation, ie. full utilization of the existing regrading plants and, as a result, of decreasing availability of requested bottle-grade PET material and corresponding abrupt increase in the price thereof on all marketplaces.

Furthermore, a number of large countries in which the consumption of such types of beverages and, as a result, such types of bottles is growing rapidly, are totally lacking such PET regrading plants, even if they actually can rely on the presence of plants for producing fiber-grade PET in large quantities.

It is therefore a purpose of the present invention to provide a method and an apparatus that are adapted to both treat fiber-grade PET in view of converting it so as to enable it to assume such properties as to make it suitable for use as bottle-grade PET, and produce bottles without the inherent complexities, costs and technical criticalnesses of a traditional PET regrading plant, as well as in a simple, reliable manner under utilization of readily available techniques.

Such a method and apparatus are implemented and carried out with the characteristics as substantially described with particular reference to the appended claims.

The invention will however be more readily understood from the description which is given below by way of non-limiting example, which may of course be subject to a number of modifications and variants without departing from the scope of the present invention, with reference to the accompanying drawings in which

- Figure 1 is a graph representing schematically the development of the degree of biaxial orientation versus intrinsic viscosity;

- Figure 2 is a graph representing the degree of biaxial orientation of PET versus stretching ratio for various values of intrinsic viscosity;

- Figure 3 is a view of a crystallization vessel and related actuation and control means according to the present invention;

- Figure 4 is a block diagram of an apparatus for producing bottles according to the present invention;

- Figure 5 is a cross-sectional view of two different preform shapes used to explain a feature of the present invention;

- Figure 6 is a schematical view illustrating the variation in volume and shape experienced by a preform being converted into a bottle.

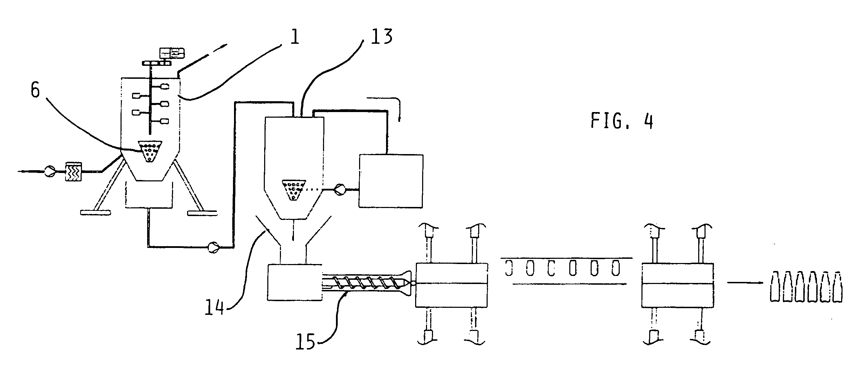

With reference to Figure 4, an embodiment of the method and apparatus according to the present invention is illustrated.

Such a method substantially comprises two phases. In the first one of such two phases the mass of granular fiber-grade PET to be treated is loaded into a vessel in which a stream of hot air at a temperature of 170°C is insufflated by appropriately arranged nozzles in such a manner that the whole mass of material in said vessel is actually exposed to and affected by such a stream. It has been experimentally found that such a process shall have a duration of approx. 1.5 hours in order to allow for acetaldehyde, which starts to evaporate at 29°C, to be almost completely driven off.

During this time it has proven necessary for the mass of granules to be continuously and vigorously stirred so as to prevent the same granules from conglomerating owing to the temperature of the air being insufflated. The means to be provided in view of performing such a stirring action will be dealt with in closer detail further on.

Such a continuous agitation of the mass of granules is necessary, in addition to bringing about the afore cited reduction of acetaldehyde, also due to the fact that it has been observed that a crystallization level of approx. 35% is thereby obtained in the whole bulk of material. Although such a crystallization percentage is still inadequate in view of obtaining the desired ultimate properties of the material, it nevertheless proves to be of valuable utility since it actually prevents the material from sticking together and clotting, being it important for said material to retain its granular form for it to be able to be effectively processed in the subsequent operations.

The so crystallized granular fiber-grade PET material (even if it has no longer its typical fiber-grade properties, actually) is then admitted into the traditional production process, ie. it is loaded in a drying apparatus where it is allowed to rest for approx. 4 hours at a temperature of approx. 170°C. It is then plastified and moluded into preforms. Finally it is blow-moulded into end-products, ie. bottles.

Therefore, before reaching the plastification stage of the process the fiber-grade PET material undergoes following treatment:

1) Crystallization for 1.5 hours at 170°C

- Initial properties of the polymer: amorphous Acetaldehyde: 60 to 66 ppm (typically).
- Final properties of the polymer: crystallinity 35% Acetaldehyde: 5 (five) ppm.

2) The material is then allowed to run through a traditional dehumidification process for a period of 4.5 hours at 170°C in substantially resting (unstirred) conditions.

- Initial properties of the granules: crystallinity 35% Acetaldehyde = 5 ppm.
- Final properties of the granules: crystallinity 50% Acetaldehyde = 3 (three) ppm.

For a better assessment of the quality of the results obtained in this manner, it should be noticed the typical properties of bottle-grade PET material are as follows:

- crystallinity: 50%
- acetaldehyde: 1 ppm
- viscosity: approx. 0.80 dl/gr.

In order to verify the viability and effectiveness of the above described crystallization process, comparative tests have been carried out using both fiber-grade and bottle-grade PET has been used, wherein the fiber-grade PET material tested was in each case treated according to the above described method. The results of a test run on two types of 1.5-liter bottles for both carbonated and non-carbonated table water are illustrated in the attached Tables 1 and 2.

To produce said bottles, two different preform samples have been used, the shape and production process of which were optimized for the bottle-grade PET material and, therefore, by setting a surface stretching ratio of 10, which is typical of such bottles.

Referring to the columns indicating the results obtained for a stretching ratio = 10, it can be inferred from Table 1 that, for table-water bottles, the overall performance profile of the fiber-grade PET bottles is slightly inferior, although fully acceptable, whereas from the corresponding data in Table 2 for carbonated beverage bottles it can be noticed that the requirement of a highest allowable acetaldehyde value of 4 ugr/lt is fully complied with in the case of the bottles made using bottle-grade PET, which in fact show a value of less than 2, while it is far from being met by the bottles made using crystallized fiber-grade PET, which reach up to a value of 5 ugr/lt.

Since acetaldehyde tends to develop during platification, which cannot be modified to any significant extent, and which depends on a number of factors, including the stretching ratio, in view of eliminating the effects thereof the attention has been focused on the stretching phase, whereby the effects of stretching on the presence of acetaldehyde have in particular been more closely investigated.

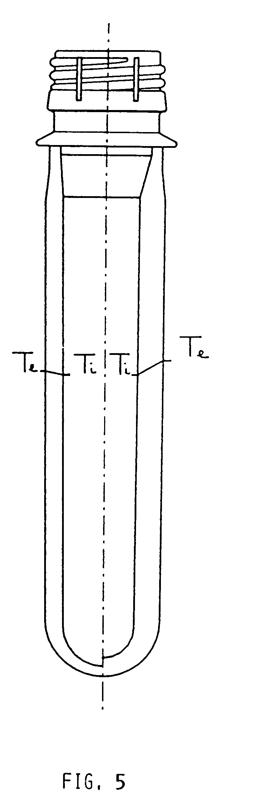

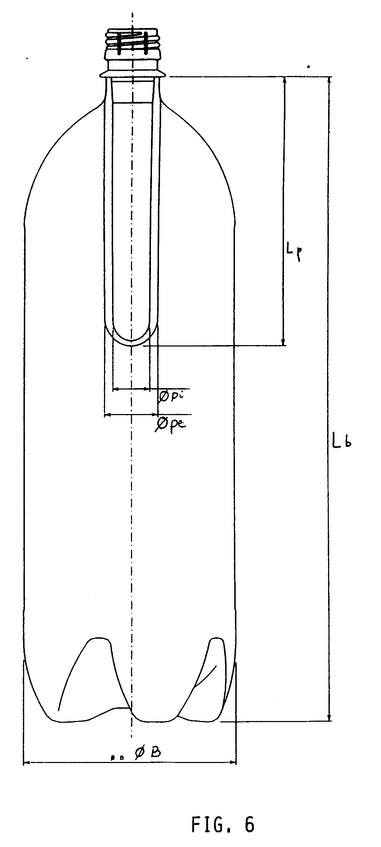

At this point, in order to gain a better insight into the processes involved, it may be useful to stress some data (see Figs. 5, 6, 7):

- axial stretching ratio
- inner radial stretching ratio
- outer radial stretching ratio
- inner surface stretching ratio
- outer surface stretching ratio

As a example, the difference between the stretching values of the inner fibers and those of the outer fibers may be observed:

$\varnothing B$ = 110 mm
$\varnothing pi$ = 25 mm
$\varnothing pe$ = 33 mm
Lb = 320 mm
Lp = 130 mm

$$RA = \frac{320}{130} = 2.47$$

$$R\varnothing i = \frac{110}{25} = 4.4$$

$$R\varnothing e = \frac{110}{33} = 3.33$$

$$Rsi = 2.5 \times 4.4 = 10.87$$

$$Rse = 2.5 \times 3.33 = 8.23$$

$$DELTA = \frac{10.87 - 8.23}{8.23} = 32\%$$

The level of crystallization induced by stretching and, as a consequence, the performance profile depend on three variables:

1) stretching ratio
2) stretching temperature
3) stretching speed or rate.

Therefore, considering the 32% delta, the reason why the crystallization induced by the stretching ratio is eventually quite different between inner and outer fibers becomes fully clear.

In order to compensate for such a disparity of stretching it is necessary to act by providing an appropriate thermal profile to the preform. In other words, provisions shall be made so as to ensure that the thermal profile through the thickness of the preform is such as to compensate for the difference in crystallinity existing between the inner and the outer fibers due to their different extent of stretching.

It has been experimentally found the the inner temperature $T_i$ shall not be lower than the outer temperature $T_e$. However, it is practically impossible for the temperature profile to be optimized when the preforms are heated by the usual process of IR-radiation heating.

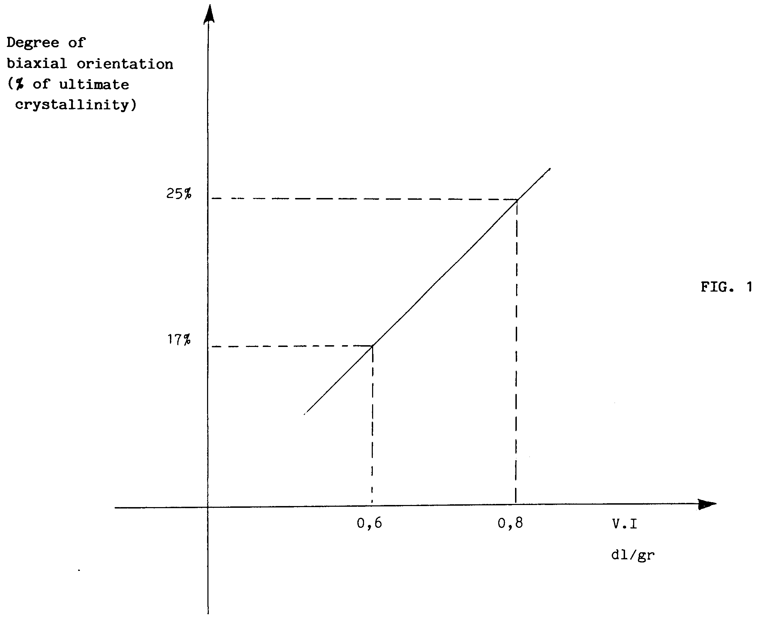

From Figure 1 it can be observed that the degree of biaxial orientation (as expressed in % of final crystallization) tends to increase with the intrinsic viscosity V.I. for a constant surface stretching ratio.

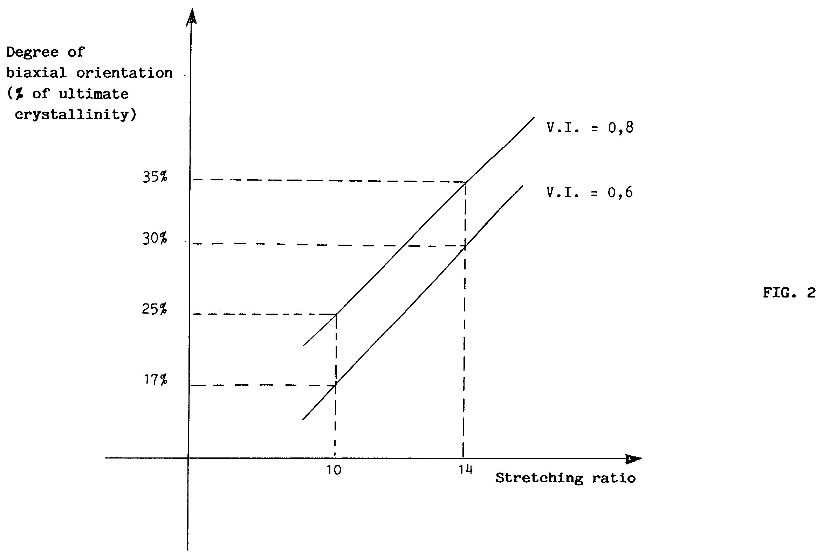

In the course of experiments performed on the bottle prototypes as described above, it has however also been found that such a degree of biaxial orientation tends to increase, albeit within well-defined limits, also with the stretching ratio, as this is shown in principle in Figure 2. In practice, when the stretching is increased to an appropriate extent, a degree of biaxial orientation is obtained which corresponds to the one of bottle-grade PET in conditions of normal stretching.

The explanation for such a behaviour can be found in the fact that such a greater stretching gives rise to a greater molecular orientation friction and such a greater molecular orientation friction causes in turn the bottle to heat up just in its "coldest" zone during blow-moulding, ie. in its outer part. Such a heating has clearly an effect in that it promotes the crystallization of the corresponding zone.

As a result, a better crystallization effect had to be expected when increasing the stretching ratio and leaving all other factors unaltered. And, indeed, such a circumstance has come true punctually. In fact, when referring to the afore cited Tables 1 and 2, and particularly to the data measured for a stretching ratio of 13.5, it can be noticed that, in the case of bottles for carbonated beverages made using fiber-grade PET treated in accordance to the described method, the level of acetaldehyde shows a value of 4 ugr/lt, ie. falls withing the highest allowable limit for such a kind of applications of the bottles.

And it is this increase in the surface stretching ratio that implements the second phase of the method, the first phase of which consists in the crystallization of the PET granules.

EP 0 752 302 A1

**TABLE 1**

1) 1.5-liter, 37-gr. bottle for carbonated and non-carbonated table water

| | Meas. Unit | Specific | Stretching Ratio 10 | | Stretching Ratio 13.5 | |
|---|---|---|---|---|---|---|
| | | | PET BOTTLE GRADE | PET FIBER GRADE | PET BOTTLE GRADE | PET FIBER GRADE |
| Intrinsic Viscosity | dl/gr | — | 0.74 | 0.60 | 0.74 | 0.60 |
| Average Wall Thickness | 1/100 mm | — | 0.24 | 0.24 | 0.25 | 0.25 |
| Axial Load | kg | — | 9.6 | 8.8 | 12.8 | 13.2 |
| Crystallinity | % | — | 21.84 | 19.32 | 27.5 | 27.5 |
| Acetaldehyde Level | µg/l | 2 | — | — | 1.8 | 3.3 |
| Moulding Cycle Time | sec | — | 14.5 | 14.10 | 21 | 22 |

TABLE 2

2) 1.5-liter, 48-gr. bottle for carbonated beverages

| | Meas. Unit | Specific | Stretching Ratio 10 PET BOTTLE GRADE | Stretching Ratio 10 PET FIBER GRADE | Stretching Ratio 13.5 PET BOTTLE GRADE | Stretching Ratio 13.5 PET FIBER GRADE |
|---|---|---|---|---|---|---|
| Intrinsic Viscosity | dl/gr | – | 0.82 | 0.60 | 0.82 | 0.60 |
| Average Wall Thickness | 1/100 mm | – | 31 | 30 | 32 | 29 |
| Axial Load | kg | min 20 | 40 | 32 | 46 | 35 |
| Crystallinity | % | – | 22 | 17 | 26.5 | 25.0 |
| Acetaldehyde Level | µg/l | max 4.0 | <2.0 | 5.0 | <2.0 | 4.0 |
| Moulding Cycle Time | sec | – | 18 | 17.7 | 22.00 | 23.2 |
| $CO_2$-Loss (12 WKS) | % | max 17.5 | 14.4 | 15.7 | 13.8 | 15 |

Substantially, said second phase of the method consists in adopting such moulds, machines and processing parameters as to be able to obtain "short" preforms which must therefore be stretched to a greater extent, in view of producing a given size and shape of bottle, as compared to normal preforms made using bottle-grade PET material.

It can therefore be concluded that the afore described crystallization process is fully adequate in view of converting

7

EP 0 752 302 A1

fiber-grade PET material into a kind of granular material which is adapted to be used for both bottles for table water, and with normal stretching ratios, for which no particularly elevated mechanical performance capabilities are required, although an adequately low level of acetaldehyde is prescribed, and bottles for carbonated beverages with high mechanical performance capabilities, since ensuring an adequately increased stretching ratio is all that is needed to it, considering that in this case the acetaldehyde content remains within its highest allowable limit.

It has furthermore been observed that the afore cited crystallization process gives rise to another kind of advantage during stretching: it in fact contributes to reducing the moisture that is present in the PET granules and that is eventually removed completely in the subsequent drying phase when the material is left to dry in the dryer. In any case, such a lower moisture content brought about by such process of crystallization of the PET in granules is of aid in favouring the crystallization on the surface zone of the preform during blow moulding, since the moisture that is still present acts as a lubricant to favour the recomposition of the molecules, thereby reducing the molecular friction, ie. the friction of the molecules against each other, and therefore reducing also the heat generated by said friction and, ultimately, lowering the degree of crystallization of the bottle.

Therefore, it can conclusively be stated that the above described crystallization process of the granular PET material increases the crystallization of the finished bottle, thereby enhancing its mechanical properties and its tightness against the loss of carbon dioxide.

Although the afore described method is ideally adapted for use in conjunction with so-called single-stage plants, it can of course be advantageously applied to two-stage plants in which preforms are produced separately for subsequent storage, or even for subsequent delivery to a different processor, and eventually heated up again and blow-moulded.

In such a kind of (two-stage) plants and processing circumstances, it is fully apparent that the afore cited phases of the described method take place on the preform production side of the process, whereas the final processor, ie. the actual bottle producer, shall only provide for its plant to be correspondingly adapted, along with the related processing parameters, in order to carry out the conversion of such preforms into bottles in the most suitable, correct manner, this adaptation anyhow being within the capabilities of anyone skilled in the art and, as a result, easily implementable.

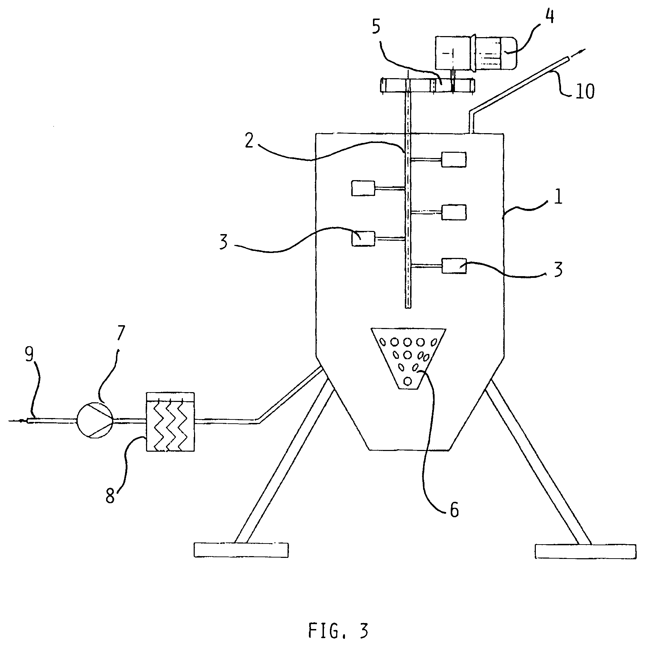

As far as the apparatus adapted to carry out the above described method is concerned, reference should be made to Figures 3 and 4, which illustrate a crystallization vessel 1 equipped with an internal rotating shaft 2 on which a plurality of stirring paddles 3 are applied through appropriate arms.

Said rotating shaft is driven by a motor 4 and a respective coupling-reduction gear unit 5. Any other stirring means may however be used for the agitation of the granular mass in the crystallization vessel, provided that it is capable of ensuring a continuous, uniform stirring action.

In an appropriately selected inner zone of the vessel there is provided an air diffuser 6, which is adapted to diffuse into the mass of granular material an air stream that is taken in and blown by a fan 7 and heated up by appropriate resistance-type heating elements 8.

The air intake opening 9 may be located in the ambient, while the vessel is prpovided with an air outlet opening 10 which therefore ensures a free air circulation inside said vessel.

At this point, the operation of the whole apparatus is quite apparent: the vessel is filled with the mass of granular fiber-grade PET and then the rotation of the stirring paddles for the agitation of the material is started at the same time as the inlet of the air heated up by the resistance-type heating elements 8 and blown-in ny the fan 7.

Such an operating condition is maintained through a period of approx. 1.5 hours, during which the material undergoes a gradual transformation leading it to assume the afore cited properties, ie.:

- crystallization: up to 35%
- acetaldehyde contents: approx. 5 ppm, substantially reduced
- extension of the molecular chain.

In addition to all that, the material undergoes a first dehumidification treatment which, as already stated, turns out to be of particular advantage in connection with the use of high stretching ratios. Furthermore, the partial transformation into a crystallized material enables the latter to be conglomerated and retain its granular condition, which is essential in view of its being processed in the subsequent phases.

In order to lower the acetaldehyde contents of the material treated with such a crystallization process, it is furthermore particularly advantageous if the air intake opening 9 is located at an adequate distance from the air outlet opening 10 of the vessel, as well as in a non-polluted ambient, so as to minimize the captured amount of acetaldehyde that may possibly be present in the air to be taken in, without any need arising for the dryer situated downstream and the procedure of utilization thereof, which must be rigidly coordinated with the subsequent preform moulding operation, to be modified.

During the various sets of experiments that have been carried out in view of optimizing the process parameters of the method according to the invention, it has been found that the best results, as far as both the crystallization of the granular fiber-grade PET material and the reduction of its acetaldehyde content are concerned, are obtained when said hot air is blown through the granular PET mass at a flow rate of approx. 3.5 cu.m per hour per each kg of granular material, with the stirring paddles rotating at a speed that should preferably amount to approx. 5 rpm.

Furthermore, as illustrated in Figure 4, and as anyone skilled in the art will now be able to understand, in view of an enhanced production efficiency and continuity it is highly advatangeous if the vessel 1 is arranged and controlled to directly unload the granular material contained in said vessel into an appropriate dryer 13 of a traditional type that is in turn connected to a hopper 14 arranged so as to be capable to supply an extruder or an injection moulding machine 15 for the production of the preforms.

It will be appreciated that the insufflation of the hot air stream through the mass of granular PET material, while at the same time stirring the same material in order to prevent it from agglomerating, may be carried out with any other suitable means. Use can be made for instance of a rotating vessel of a type similar to the usual concrete mixers, or the industrial mixers used to knead the most varied substances, and provided with inner agitation ribs attached to the inner wall of the vessel to ensure adequate agitation, while the hot air diffuser may be provided so as to be capable of being actuated for insertion in and removal from the mouth of the rotating vessel. It is also possible to provide a vessel rotating about a horizontal axis and equipped with two openings situated in opposite positions so as to allow for the inlet and the otlet of the hot air, respectively.

A method and a related apparatus have therefore been provided, which, based on the use of crystallizing means as described above, are capable of converting fiber-grade PET material into a material that, if just care is taken to process it into "short" preforms in view of an increased stretching ratio during subsequent blow-moulding, can be used to produce bottles intended to contain carbonated water or beverages without any qualitative or performance limitations whatsoever, wherein existing plants and processes can be further used under the sole addition of a pre-treatment or crystallization apparatus, and related process, adapted to concert the material before it is loaded in the dryer and, therefore, let into the traditional moulding process.

**Claims**

1. Method for pre-treating a mass of fiber-grade PET (polyethylene terephthalate) resin in granular form, **characterized in that** said pre-treatment method is carried out before a drying treatment and includes keeping said mass of PET resin in a stream of air heated to a temperature of substantially 170°C through a period of not less than 1.1 hours in such a manner that substantially the entire mass of resin is exposed to and affected by said stream of hot air.

2. Method according to claim 1, **characterized in that** substantially the entire mass of said PET resin is stirred continuously.

3. Method according to claim 2, **characterized in that** said stream of air is taken in from the ambient, is appropriately heated up and blown into the bulk of said mass of granular resin, and is finally exhausted in such a manner as to prevent it from mixing up with the ambient air that is taken in to carry out said method.

4. Method according to any of the preceding claims, **characterized in that** said air stream is blown in at a flow rate of approx. 3.5 cu.m of air per hour per kg of granular PET material being treated.

5. Method according to any of the preceding claims, **characterized in that** it is allowed to continue until thecrystallinity of the material being treated reaches a value of approx. 35%.

6. Method according to any of the preceding claims, **characterized in that** it is allowed to continue until the acetaldehyde content of the material being treated is lowered down to a value equal to substantially 5 ppm.

7. Method for producing hollow bodies of fiber-grade PET material, comprising a first stage in which the preforms are produced and a second stage in which such preforms and then blow-moulded into said hollow bodies, **characterized in that** said fiber-grade PET material is previously treated in accordance to the method according to any of the preceding claims 1 to 6, and that in said final blow-moulding stage the surface stretching ratio of the preforms is not less than 1:13.

8. Method for producing hollow bodies, **characterized in that**:

   - the material used to produce said hollow bodies is at least partially fiber-grade PET resin,
   - said fiber-grade PET resin is allowed to undergo a crystallization method in accordance to any of the preceding claims 1 to 6 before being dried, melted and moulded into preforms,
   - the surface stretching ratio of the preforms to the finished hollow bodies moulded therefrom is at least 13.

9. Apparatus for producing hollow bodies of PET material, **characterized in that** it comprises a vessel (1) and means for continuously stirring said PET material in granular form, as well as means for continuously blowing in and circulating hot air in said vessel.

10. Apparatus according to claim 9, **characterized in that** said vessel (1) is provided with at least a rotating shaft (2) carrying a plurality of agitation paddles (3) applied to said shaft through appropriate arms, said at least a rotating shaft being appropriately provided with driving means (9), preferably an electric motor.

11. Apparatus according to claim 10, **characterized in that** said means for continuously blowing in and circulating hot air comprise:

   - at least an air intake opening (9) through which air is taken in from the outside ambient,
   - at least a blowing means (7), preferably an electric fan, for blowing said air, and an associated heating means (8), preferably one or more resistance-type electric heating elements, adapted to heat up the air flowing across it to a temperature of approx. 170°C,
   - at least a respective air diffuser means (6) adapted to diffuse the air taken in by said blowing means (7) into the mass of said PET material in granular form,
   - at least an opening (10) for exhausting the air blown into said vessel, said exhaust opening being preferably arranged on the opposite side of the vessel with respect to said air diffuser.

12. Apparatus according to claim 11, **characterized in that** said at least an air exhaust opening (10) is arranged to flow into an appropriate discharge conduit (11) that is adapted to exhaust the air in a zone which is appropriately remote from said at least an air intake opening, so as to minimize the risk of said exhaust air being taken in again through said air intake opening.

13. Apparatus according to any of the preceding claims 9 to 12, **characterized in that** it is adapted to circulate air in said vessel at a flow rate of approx. 3.5 cu.m per hour per kg of granular material contained in said vessel.

14. Apparatus according to any of the preceding claims 9 to 13, **characterized in that** said agitation paddles are rotated at a speed of approx. 5 rpm.

15. Apparatus according to any of the preceding claims 9 to 14, **characterized in that** it is adapted to unload the granular material contained in said vessel into an appropriate dryer (13) that is connected to the hopper (14) of an extruder or an injection moulding machine (15).

Degree of
biaxial orientation
(% of ultimate
 crystallinity)

25%

17%

0,6    0,8    V.I

dl/gr

FIG. 1

EP 0 752 302 A1

Degree of
biaxial orientation
(% of ultimate
 crystallinity)

V.I. = 0,8

V.I. = 0,6

35%

30%

25%

17%

10    14    Stretching ratio

FIG. 2

FIG. 3

FIG. 4

FIG. 5

FIG. 6

European Patent Office

**EUROPEAN SEARCH REPORT**

Application Number

| | DOCUMENTS CONSIDERED TO BE RELEVANT | | EP 96110344.7 | |
|---|---|---|---|---|
| Category | Citation of document with indication, where appropriate, of relevant passages | Relevant to claim | CLASSIFICATION OF THE APPLICATION (Int. Cl. 6) | |
| X | EP - A - 0 597 155 (KARL FISCHER) * Column 3, lines 54-58; column 4, lines 1-16; fig. 1 * | 1,2,4, 9-11, 13,14 | B 29 B 13/02 C 08 G 63/90 B 29 B 13/06 //B 29 K 667:00 | |
| A | | 3,5 | | |
| X | US - A - 3 547 890 (SEIBI YAMADA) * Column 3, line 75; column 4, lines 1-13; fig. 1 * | 1,2,4 | | |
| A | | 5 | | |
| X | GB - A - 2 002 403 (ZIMMER) * Page 3, table 1 * | 1,6 | | |
| A | | 7,8 | | |
| X | FR - A - 1 327 555 (N.V. ONDERZOEKINGSINSTITUUT RESEARCH) * Totality * | 1,2,5 | TECHNICAL FIELDS SEARCHED (Int. Cl. 6) B 29 B C 08 G | |

The present search report has been drawn up for all claims

| Place of search | Date of completion of the search | Examiner |
|---|---|---|
| VIENNA | 09-09-1996 | REININGER |